# FASCICULE DE BREVET EUROPEEN

(11) **EP 0 731 728 B1**
(45) Date de publication et mention de la délivrance du brevet: **11.03.1998**
(21) Numéro de dépôt: 95902827.5
(22) Date de dépôt: 02.12.1994
(51) Int. Cl.: B01J 19/02, B01J 8/44, B01D 25/21, B01D 3/32, F28F 21/06, B29C 67/24

(54) **ELEMENT DE STRUCTURE D'UN DISPOSITIF DE TRAITEMENT DE MATIERES CORROSIVES A CHAUD ET SOUS CONTRAINTE**
STRUKTURELEMENT FÜR EINE VORRICHTUNG ZUR WARMBEHANDLUNG VON KORROSIVEN MATERIALIEN UNTER SPANNUNG
STRUCTURE ELEMENT OF A DEVICE FOR THE TREATMENT OF CORROSIVE MATERIALS IN HEAT AND STRESS CONDITIONS

(30) Priorité: 02.12.1993 FR 9314471
(43) Date de publication de la demande: 18.09.1996
(73) Titulaire: TELENOR S.A., 92800 Puteaux (FR)
(72) Inventeur: RECHER, Gilles, F-59700 Marcq-en-Baroeul (FR); BIELARSKI, Zdzislaw, F-62223 Ste Catherine (FR)
(74) Mandataire: Phélip, Bruno
(86) Numéro de dépôt international: FR9401409
(87) Numéro de publication internationale: WO9515214

(56) Documents cités:
- EP-A- 0 142 173
- EP-A- 0 233 521
- EP-A- 0 358 158
- EP-A- 0 460 652
- FR-A- 2 302 123
- PE PLAST EUROPE, no.1, Avril 1993, MUNICH, DE pages 74 - 76 S.M.DOUGHTY ET AL. 'Nouveaux thermodurcissables résistants au choc' cité dans la demande
- PATENT ABSTRACTS OF JAPAN vol. 12, no. 18 (M-660) 20 Janvier 1988 & JP,A,62 175 592 (MITSUBISHI ELECTRIC CORP.) 1 Août 1987

## Description

L'invention concerne un élément de structure d'un dispositif de traitement de matières corrosives à chaud et sous contrainte. Cet élément est notamment destiné à être utilisé dans un filtre-presse, un échangeur de chaleur, une colonne à distiller, dans un lit fluidisé ou encore dans une cellule d'électrolyse.

L'invention concerne plus particulièrement un élément qui peut être soumis à une pression relativement importante et notamment supérieure à 5 kg/cm².

Ainsi, l'élément selon l'invention est conçu pour résister à une corrosion sous contrainte. On entend par corrosion sous contrainte, une immersion dans un milieu corrosif, d'une pièce par ailleurs soumise à des contraintes mécaniques, dues à une force extérieure et notablement supérieures à son poids propre. La corrosion sous contrainte se distingue d'une corrosion statique, pour laquelle une pièce est simplement immergée dans le milieu corrosif.

Le milieu corrosif considéré peut être une solution aqueuse, un gaz ou un liquide. On peut notamment citer les gaz corrosifs tels que les halogènes ou les fumées acides ainsi que les acides et bases, anhydres ou en solution aqueuse.

La température du milieu corrosif est notamment inférieure ou égale à 100°C.

On sait que les filtres-presses sont classiquement utilisés pour éliminer mécaniquement l'eau des matières boueuses. Ils comprennent en général une série de plateaux parallèles qui supportent chacun une matière filtrante. les plateaux sont juxtaposés et serrés les uns contre les autres entre deux plateaux de tête dont l'un au moins est mobile.

On peut notamment citer le document GB-1,083,679 qui concerne un filtre-presse qui peut être utilisé pour filtrer des matières corrosives, acides ou alcalines.

Comme l'indique ce document, les plateaux métalliques sont lourds, ne résistent pas tous à la corrosion et posent des problèmes d'étanchéité. C'est pourquoi, il prévoit de former chaque plateau en un matériau stratifié résistant aux acides, notamment en Formica®. On sait que ce matériau est constitué à partir de fibres de papier enrobées dans une résine mélamine.

Cependant, comme l'indique le document US-4,725,347, les matériaux plastiques renforcés par des fibres ne résistent pas de manière durable à la corrosion. En effet, les fibres permettent la pénétration de la solution corrosive à l'intérieur du matériau.

Ainsi, le matériau plastique mentionné dans le document GB-1,083,179 ne convient pas pour un cadre de filtre-presse destiné à être placé, sous contrainte, dans un milieu corrosif.

Le document FR-2 135 475 décrit également un plateau pour filtres-presses, constitué d'un cadre métallique entourant une plaque centrale en un matériau plastique renforcé de fibres de verre pour diminuer le poids du plateau. Un tel plateau ne résiste pas non plus à la corrosion et il est, de plus, de réalisation compliquée puisqu'il nécessite l'utilisation de deux matériaux différents.

On peut également se référer au document GB-2,200,301 qui décrit un plateau de filtre-presse réalisé en un matériau thermoplastique. Les matériaux mentionnés sont notamment l'ABS (copolymère d'acrylonitrile-styrène-butadiène) et ses dérivés ainsi que les polyoléfines thermoplastiques et leurs dérivés (notamment polyéthylène et polypropylène).

Le document GB-2,200,301 n'indique pas que le filtre-presse est destiné à être utilisé avec des milieux corrosifs. Il apparaît, de plus, du document US-4,668,371 que ce type de matériau ne résiste pas à un milieu corrosif.

En effet, ce dernier document décrit un cadre pour cellule d'électrolyse qui est donc destiné à être utilisé en milieu corrosif. Il est constitué par un cadre en matière plastique, ABS ou polyoléfines. Ce cadre est recouvert de couvercles métalliques, notamment en titane et nickel. Ces deux couvercles ont pour objet d'empêcher tout contact entre le cadre en matière plastique et la solution corrosive, ce qui montre bien que le filtre-presse décrit dans le document GB-2,200,301 ne convient pas pour filtrer des matières corrosives.

Le cadre décrit dans le document US-4,668,371 présente cependant des inconvénients. Il est tout d'abord de réalisation compliquée, puisqu'il nécessite l'utilisation de trois matériaux différents: un matériau plastique résistant au fluage à chaud et deux métaux de protection contre la corrosion. La réalisation des pièces, et notamment celle des interfaces entre les matériaux, présente des difficultés. Les opérations de montage sont également complexes. De plus, un tel cadre pose de nombreux problèmes d'étanchéité, dus à la dilatation différentielle des matériaux. Celle-ci engendre des contraintes au niveau de l'interface qui créent des fuites. Ces dernières entraînent la destruction de la structure interne, qui n'est pas résistante à la corrosion.

L'invention a pour objet de résoudre les problèmes posés par les éléments de structure de l'état de la technique, notamment en termes de résistance à la corrosion, de complexité de fabrication et de fiabilité.

L'invention propose un élément de structure d'un dispositif de traitement de matières corrosives à chaud et sous contrainte, réalisé en une seule matière, résistant à la corrosion sous contrainte extérieure à chaud et capable de reprendre des efforts de structure.

L'élément de structure selon l'invention est constitué de monomères qui sont polymérisés en masse dans un moule fermé, cet élément étant constitué en une seule pièce, de façon à assurer une étanchéité pour la matière corrosive quand l'élément est placé dans le dispositif et qu'une contrainte extérieure est exercée sur le dispositif.

Dans un premier mode de réalisation, lesdits monomères ont une fonction norbornène.

De préférence, le monomère ayant une fonction norbornène est le dicyclopentadiène.

Dans un deuxième mode de réalisation, le polymère obtenu est du type polyuréthane.

Selon une forme de réalisation, l'élément de structure selon l'invention comporte un cadre périphérique, et une partie centrale d'épaisseur plus faible et présente de préférence une forme sensiblement plane.

De manière avantageuse, les moyens nécessaires au fonctionnement du dispositif, tels que les moyens d'alimentation en fluide, ou à son contrôle, sont intégrés audit élément.

L'élément de structure selon l'invention peut avantageusement comporter des inserts.

L'élément de structure selon l'invention peut être en contact avec une matière corrosive dont la température est inférieure ou égale à 100°C. Il peut également être soumis à une pression supérieure à 5 kg/cm², cette pression étant, lorsque ledit élément présente une forme sensiblement plane, de préférence exercée selon une direction sensiblement perpendiculaire au plan dudit élément.

Selon une première variante, l'élément de structure constitue un plateau de filtre-presse et comporte au moins une ouverture pour l'introduction de la matière à traiter et au moins un passage pour la sortie du liquide.

Selon une deuxième variante, l'élément de structure constitue un plateau pour un échangeur de chaleur.

Dans ce cas, il comprend de préférence une partie centrale en forme de serpentin et au moins un conduit pour le passage du fluide.

Selon une troisième variante de réalisation, l'élément de structure selon l'invention constitue un plateau pour un lit fluidisé et comporte des ouvertures pour le passage d'un gaz.

Selon une quatrième variante de réalisation, l'élément de structure selon l'invention constitue un plateau de colonne à distiller et comporte au moins une ouverture pour le passage de vapeurs, ladite ouverture étant surmontée d'une pièce pour la condensation des vapeurs.

Selon une cinquième variante de réalisation de l'invention, l'élément de structure selon l'invention constitue un plateau pour une cellule d'électrolyse.

L'invention concerne également un dispositif de traitement de matières corrosives à chaud et sous contrainte, comprenant au moins deux éléments de structure selon l'invention, lesdits éléments étant juxtaposés, et deux éléments terminaux, placés de part et d'autre desdits éléments de structure, au moins un desdits éléments terminaux étant mobiles pour pouvoir exercer une contrainte de pression sur lesdits éléments de structure.

Dans un mode de réalisation, lesdits éléments de structure et lesdits éléments terminaux présentent une forme sensiblement plane, la contrainte de pression étant alors, de préférence, exercée dans une direction sensiblement perpendiculaire au plan desdits éléments de structure.

L'invention sera mieux comprise et d'autres buts, avantages et caractéristiques de celle-ci apparaîtront plus clairement à la lecture de la description qui suit, faite en référence aux dessins annexés, sur lesquels:
- la figure 1 représente une coupe partielle schématique d'un filtre-presse comprenant des éléments selon l'invention,
- la figure 2 est une coupe partielle d'un échangeur plaque, comportant des éléments selon l'invention,
- la figure 3 représente une coupe partielle d'un lit fluidisé, comportant des éléments selon l'invention,
- la figure 4 représente une coupe partielle d'un élément selon l'invention utilisé dans une colonne à distiller, et
- la figure 5 représente une coupe partielle d'un élément selon l'invention utilisé dans une cellule d'électrolyse.

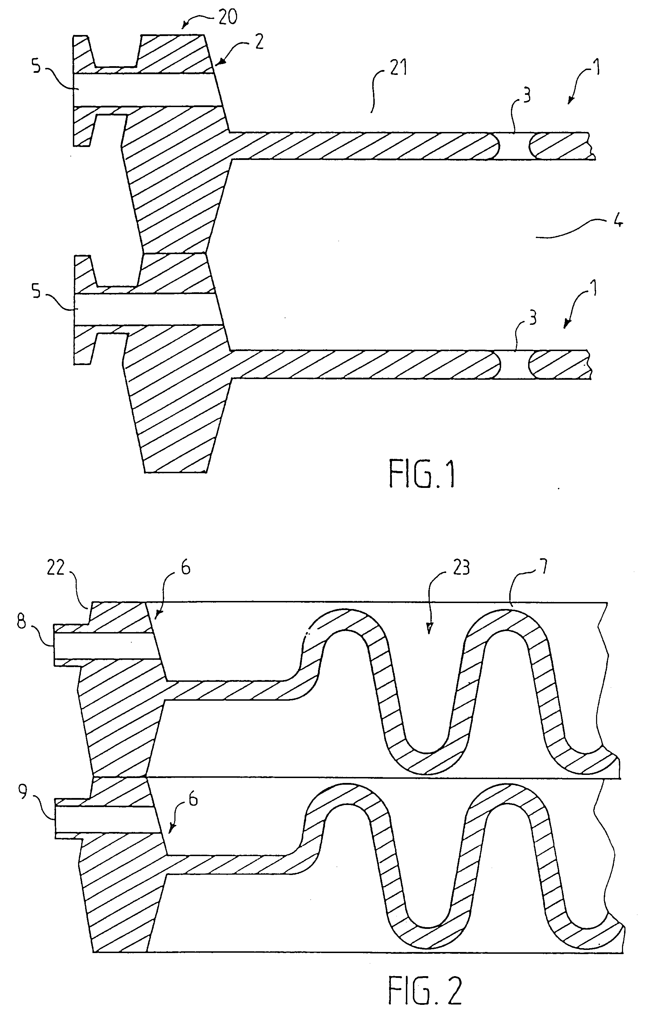

Le filtre-presse représenté à la figure 1 est constitué, de manière classique, par une série de plateaux 1 qui sont chacun entourés par des moyens filtrants tels qu'un tissu filtrant 2. Les plateaux 1 présentent une ouverture centrale 3 à travers laquelle est envoyée la matière à filtrer. Ils sont constitués d'un cadre périphérique 20 et d'une partie centrale 21 d'épaisseur plus faible que celle du cadre.

Les plateaux 1 sont juxtaposés de façon à ce que le cadre d'un plateau vienne en contact avec les cadres des plateaux adjacents.

Les plateaux de filtre-presse sont généralement de forme sensiblement plane et rectangulaire et disposés de façon verticale.

Aux deux extrémités du filtre, sont prévus deux plateaux de tête, dont au moins l'un est mobile en direction de l'axe du filtre pour serrer les plateaux 1 fortement les uns contre les autres. Les plateaux de tête ne sont pas représentés sur la figure 1.

La pression de serrage est exercée dans une direction sensiblement perpendiculaire au plan des plateaux. La pression à laquelle sont soumis les cadres périphériques est par exemple supérieure à 5 kg/cm² et peut aller jusqu'à 30 kg/cm². Elle est destinée à assurer l'étanchéité du filtre-presse.

La matière qui passe par les ouvertures centrales 3, arrive dans une chambre 4 ménagée entre deux plateaux 1. Ainsi, les faces de la partie centrale 21 des plateaux 1 sont en contact avec la matière corrosive. En service, le liquide contenu dans la matière envoyée dans la chambre 4 traverse, sous l'action de la pression, le tissu filtrant 2 et il est évacué à travers les conduits 5 pratiqués dans les plateaux. La matière solide est retenue sur le tissu filtrant 2. Ainsi, pour vider le filtre, il est nécessaire d'écarter les plateaux de tête et d'enlever un à un les plateaux 1.

Dans ce mode de réalisation, ce sont les plateaux qui constituent les éléments de structure selon l'invention.

Cette notion d'élément de structure se caractérise dans la présente demande par le fait qu'au moins une partie de l'élément, la partie cadre 20, de forme générale sensiblement plane, est conçue pour résister aux contraintes mécaniques de compression exercées par les éléments terminaux, c'est-à-dire les plateaux de tête, dans la direction perpendiculaire au plan de l'élément.

Ces contraintes assurent le contact étanche entre deux éléments adjacents du dispositif, permettant ainsi d'éviter toute fuite du fluide corrosif circulant dans le dispositif, à travers les éléments de structure.

Dans le cas où les surfaces en contact de deux éléments adjacents présentent des irrégularités de surface, un joint souple peut être intercalé entre les deux éléments pour combler ces irrégularités, sous l'effet des contraintes de compression.

Conformément à l'invention, les plateaux sont réalisés en une seule pièce et en un seul matériau obtenu par polymérisation.

De préférence, les monomères mis en oeuvre présentent une fonction norbornène. Ce matériau est notamment commercialisé sous les marques suivantes: TELENE®, METTON®, PENTAM®.

Les caractéristiques et les propriétés de ce matériau ainsi que les procédés de polymérisation utilisés seront décrits plus en détail dans la suite de la description.

Il présente une excellente résistance à la corrosion. Ceci permet d'éviter la présence de protection métallique, ce qui simplifie considérablement la fabrication et le montage des plateaux, supprime tout risque de fuites et diminue également l'épaisseur des plateaux.

De plus, ce matériau est thermodurcissable. Il est donc résistant au fluage à chaud sous contrainte ou encore à l'écrasement à chaud.

Il présente de plus une grande stabilité dimensionnelle et il est facile à usiner. Ceci permet notamment de réaliser des conduits 5 à travers la matière du plateau 1, sans qu'il soit nécessaire de les protéger contre le milieu corrosif.

On peut également réaliser les plateaux en polyuréthane, pour certains types de milieu corrosif.

On se réfère maintenant à la figure 2 qui illustre un échangeur de chaleur de type plaque.

Cet échangeur comprend, de façon connue, une série de plateaux 6 constitués d'un cadre périphérique 22 et d'une partie centrale 23 d'épaisseur plus faible. Ils sont juxtaposés de façon à ce que les cadres périphériques 22 soient en contact. Seuls deux plateaux 6 sont partiellement représentés sur la figure 6.

Les plateaux 6 peuvent être disposés horizontalement, comme sur la figure 2, ou verticalement.

Ils comportent, dans leur partie centrale, des ondulations ou serpentin 7, qui permettent d'augmenter l'échange de chaleur.

Chacun de ces plateaux 6 comporte un conduit 8, 9, qui permet l'introduction de fluides. Ainsi, les faces de la partie centrale des plateaux 6 est en contact avec les matières corrosives.

A titre d'exemple, on peut introduire par le conduit 8 un acide en solution aqueuse et, par le conduit 9, de l'eau. Un tel système permet alors le refroidissement de l'acide par l'eau.

Conformément à l'invention, les plateaux 6 sont constitués d'une pièce en un matériau, notamment obtenu par polymérisation de monomères présentant une fonction norbornène. On peut également envisager de réaliser les plateaux en polyuréthane.

Pour permettre un bon échange de chaleur, l'épaisseur du matériau est inférieure ou égale à 1 mm et de préférence, inférieure à 0,5 mm.

On peut également prévoir de réaliser le serpentin 7 en métal, de façon à améliorer l'échange de chaleur.

Comme indiqué précédemment, le matériau constitutif des plateaux 6 présente une excellente résistance à la corrosion et assure l'étanchéité lorsqu'une contrainte extérieure est exercée sur l'échangeur. De façon classique, une pression de l'ordre de 5 kg/cm² est appliquée sur l'échangeur, elle peut atteindre 30 kg/cm².

Ce matériau assure également la reprise des efforts de structure. De plus, les conduits 8 et 9 peuvent être directement usinés dans les plateaux, sans qu'il soit nécessaire de les protéger contre la corrosion, l'ensemble des plateaux étant réalisé dans le même matériau.

Comme dans le cas du filtre-presse, les plateaux 6 constituent des éléments de structure de l'échangeur. Cette notion d'élément de structure implique qu'au moins une partie du plateau, ici le cadre 22, est conçue pour résister aux contraintes mécaniques de compression exercées sur l'échangeur. Ces contraintes permettent d'assurer le contact étanche entre deux plateaux.

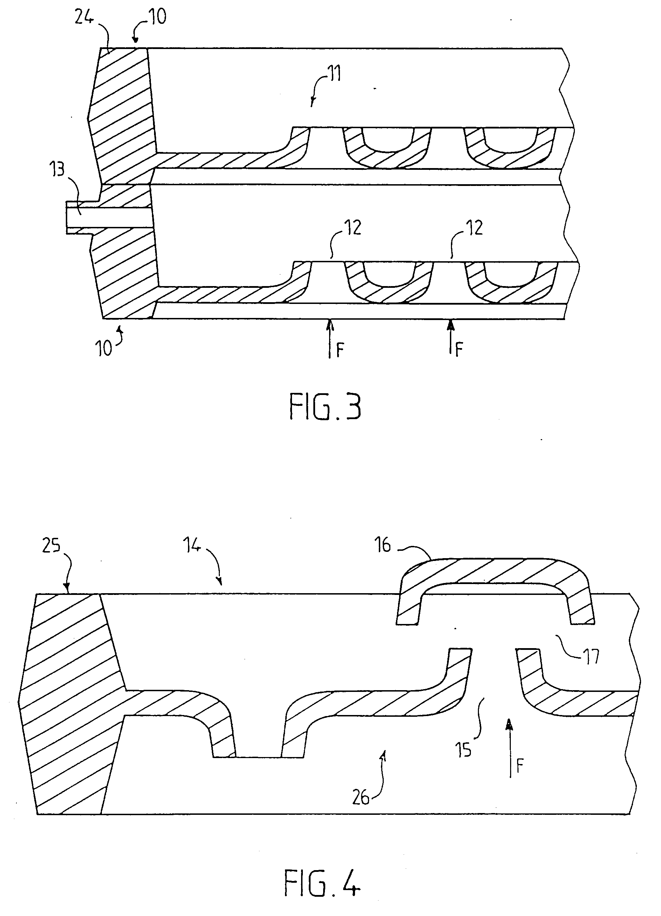

En référence maintenant à la figure 3, l'élément de structure selon l'invention peut également prendre la forme d'un plateau pour lit fluidisé.

Deux plateaux 10 de ce type sont partiellement représentés sur la figure 3. Ils comprennent un cadre périphérique 24 et une partie centrale 11 d'épaisseur plus faible.

Les plateaux 10 sont disposés horizontalement, comme illustré à la figure 3.

De façon connue, ces plateaux 10 comportent dans leur partie centrale 11 des trous 12.

Entre ces plateaux, sont placées des masses poreuses, imprégnées avec un catalyseur. L'ensemble de l'assemblage est rempli par de la matière, se présentant généralement sous forme pulvérulente. Les plateaux permettent que la pression, à l'intérieur du dispositif, ne soit pas trop importante. Ainsi, la matière peut être sans arrêt brassée grâce à un courant de gaz circulant de bas en haut, comme indiqué par les flèches F. Le gaz peut circuler à travers les ouvertures 12. Les faces de la partie centrale 11 des plateaux 10 sont donc en contact avec des matières corrosives.

Comme le montre également la figure 3, on peut prévoir un alésage 13 dans un des plateaux pour permettre notamment la fixation d'une sonde de contrôle, par exemple une sonde de température, un capteur d'humidité ou encore un capteur de pression.

Les plateaux 10 sont également réalisés d'une pièce et dans le même matériau, c'est-à-dire à base de polymères obtenus à partir de monomères présentant une fonction norbornène. Ils peuvent également être réalisés en polyuréthane.

Comme dans les formes de réalisation précédentes, une contrainte extérieure est exercée sur les plateaux 10 pour assurer l'étanchéité du lit fluidisé. Une pression d'environ 5 kg/cm² est généralement appliquée.

Comme cela a été indiqué plus haut, le matériau utilisé permet aux plateaux de résister aux contraintes mécaniques de compression. Les plateaux présentent donc une résistance appropriée à l'écrasement. Ainsi, l'espace entre deux plateaux est maintenu, ce qui assure que le courant de gaz pourra toujours circuler à l'intérieur du lit fluidisé.

Les plateaux pour lit fluidisé répondent également à la notion d'élément de structure, puisqu'au moins la partie cadre 24 résiste aux contraintes mécaniques et reprend les efforts exercés sur le lit fluidisé.

Ces plateaux sont généralement de forme générale plane et sensiblement circulaire.

En référence à la figure 4, l'élément de structure selon l'invention peut prendre la forme d'un plateau de colonne à distiller.

Ce plateau présente également un cadre périphérique 25 et une partie centrale 26 d'épaisseur plus faible.

Ce plateau 14 comporte des ouvertures, dont une est représentée sur la figure 4 et porte la référence 15. Une pièce 16 est fixée au-dessus de l'ouverture 15. Les moyens de fixation de l'élément 16 sur le plateau 14 ne sont pas représentés sur la figure, ils peuvent notamment être réalisés en métal.

La pièce 16 est fixée de façon à surmonter l'ouverture 15. Elle a une forme telle qu'elle recouvre complètement l'ouverture 15 en ménageant des passages 17. Ainsi, lorsque des gaz circulent par l'ouverture 15 selon la flèche F représentée sur la figure 4, ils se condensent sur la pièce 16 et les condensats sont recueillis sur le plateau 14. Les faces de la partie centrale du plateau 14 sont donc en contact avec des matières corrosives.

L'ensemble du plateau, avec les pièces 16, est constitué dans les mêmes matériaux que dans les exemples précédents. Le plateau présente donc une structure résistante à la corrosion sous contrainte et répond à la notion d'élément de structure.

Les plateaux 14 sont disposés horizontalement, comme illustré à la figure 4.

Comme cela a été indiqué au regard de la figure 3, on peut prévoir des alésages dans l'élément de structure qui peuvent être utilisés pour fixer des sondes de contrôle ou encore des pièces métalliques, notamment destinées à assurer la mise à la terre.

L'élément de structure étant moulé comme cela va être décrit plus en détail, on peut également prévoir des inserts surmoulés.

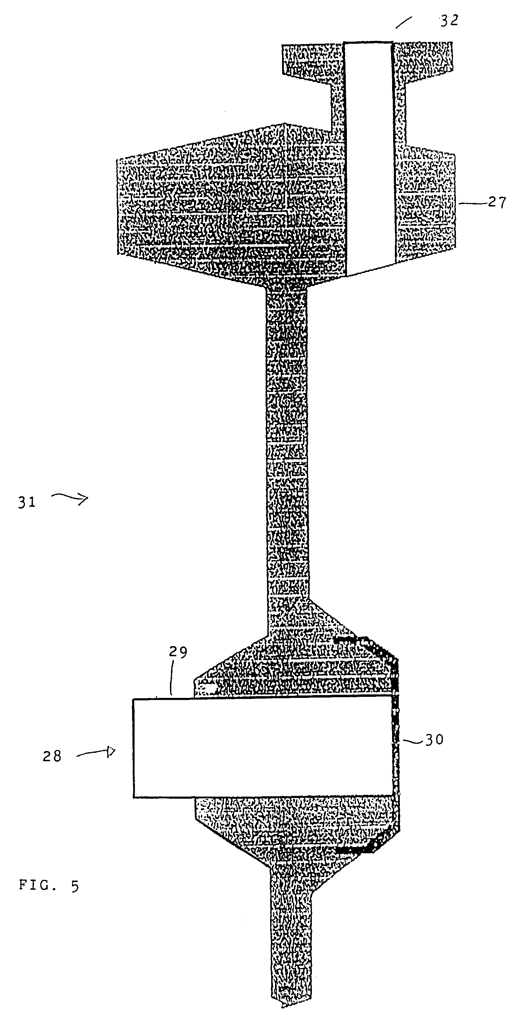

Enfin, en référence à la figure 5, l'élément de structure selon l'invention prend la forme d'un cadre de cellule d'électrolyse.

Le fonctionnement d'une telle cellule ne fait pas l'objet de l'invention et ne sera donc pas décrit ici en détail. On peut, à cet égard, se reporter au brevet US-4,668,371, déjà cité dans l'introduction de la description.

De façon générale, une cellule d'électrolyse complète comprend une juxtaposition de cadres 31, séparés par une membrane semi-perméable, non représentée sur la figure. Chaque cadre d'électrolyse comprend une face anodique et une face cathodique, selon l'électrolyte présent au contact de cette face.

La partie cadre périphérique et épaisse 27 du cadre d'électrolyse 31, qui est représentée seule et partiellement sur la figure 5, délimite le volume interne de la cellule dans lequel circule l'électrolyte.

La pression de serrage des cadres les uns contre les autres assure l'étanchéité des compartiments.

Chaque cadre d'électrolyse comprend, au travers de la partie cadre périphérique 27, des canaux d'amenée des électrolytes dans chaque compartiment et d'évacuation des produits fournis, tel que le canal 32.

Comme cela sera décrit plus en détail dans la suite de la description, le cadre est injecté dans un moule fermé dans lequel on a préalablement placé des inserts métalliques 28 qui servent au transport du courant.

Ces inserts sont composés, pour des raisons de résistance à la corrosion et de coût, d'un fût cylindrique 29 comportant des striures en partie centrale qui ne sont pas représentées sur la figure 5. Le fût est réalisé notamment en acier inoxydable, sur lequel est soudée une coupelle de protection 30, réalisée par exemple en titane, zirconium, tungstène ou en alliage à base de tout ou partie de ces métaux.

Au cours de la polymérisation, le retrait du polymère autour de l'insert permet d'assurer la liaison entre le cadre et les inserts. La réalisation proposée permet d'éviter la diffusion de l'électrolyte anodique vers le fût cylindrique de l'insert et vers l'électrolyte cathodique. Les striures renforcent le maintien de l'insert et l'étanchéité.

Les conditions de fonctionnement d'une telle cellule d'électrolyse sont par exemple les suivantes:

| | |
|---|---|
| - température de fonctionnement: | 60 à 90°C |
| - pression de serrage du cadre entre les plaques terminales: | 30 kg/cm² |
| - insert réalisé en acier inoxydable pour la partie cylindrique, en contact avec l'électrolyte cathodique coupelle réalisée en alliage de type Hastelloy® | |

Lorsque la cellule est destinée à la production de soude ou de chlore, à partir d'une solution saine, on préfère réaliser le cadre par polymérisation de monomères présentant une fonction norbornène.

Pour la production d'eau oxygénée, on préfère réaliser le cadre en polyuréthane, compte-tenu du caractère fortement oxydant de l'eau oxygénée.

Ainsi, les milieux corrosifs particuliers pour lesquels on peut préférer utiliser des matériaux du type polyuréthanne, injectés selon les procédés RIM ou RTM, sont : les milieux de type oxydant fort, tel que l'eau oxygénée concentrée (> 7%), l'acide nitrique concentré et chaud (> 10% et 50°C), l'acide sulfurique concentré et chaud (> 70% et 40°C).

Ainsi, dans un premier mode de réalisation de l'invention, le matériau utilisé est un système de résines liquides à base de monomères ayant une fonction norbornène dont la mise en oeuvre est réalisée par la technologie RIM (Reaction Injection Molding) ou RTM (Reaction Transfer Molding). On peut notamment se référer à cet égard au brevet US-5,087,343.

Les monomères ayant une fonctionnalité norbonène qui peuvent être polymérisés en masse sont caractérisés par la présence d'au moins un groupe norbornène identifié par la formule ci-dessous, qui peut être substitué ou non substitué:

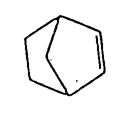

Les espèces préférées sont identifiées par les formules II et III ci-dessous. 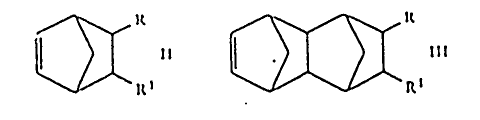 où R et R¹ sont choisis indépendamment à partir de l'hydrogène, de radicaux alkyl, aryl ayant de 1 à 20 atomes de carbone et des groupes cycliques saturés et insaturés renfermant de 3 à 12 atomes de carbone formés par R et R¹ ensemble avec les deux atomes de carbone cycliques qui sont reliés.

Des exemples de monomères ayant une fonctionnalité norbornène définie par les formules ci-dessus comprennent le norbornène, le dicyclopentadiène, l'éthylène-norbornène, le dihydrodicyclopentadiène, les trimères de cyclopentadiène, les tétramères de cyclopentadiène, le tétracyclododecène, le méthyltétracyclododecène, et leurs dérivés substitués comme le 5-méthyl-2 norbornène, 5-éthyl-2-norbornène, 5,6-diméthyl-2-norbornène et des dérivés similaires.

La présente invention vise notamment l'utilisation des homopolymères, des copolymères et des terpolymères comprenant du dicyclopentadiène avec des monomères tels que le méthylnorbornène, l'éthylidène norbornène, les trimères et les tétramères de cyclopentadiène et de méthyltétracyclododecène.

Le dicyclopentadiène est obtenu par dimérisation spontanée du cyclopentadiène à partir des coupes C5 de vapocraquage.

Pour réaliser la polymérisation en masse de ces monomères dans un moule, on utilise un système de catalyseur de métathèse approprié.

Le système de catalyseur de métathèse comprend un catalyseur et un cocatalyseur. Chaque composant peut être dissout dans les courants séparés du monomère et mélangé avant d'être transféré dans la cavité du moule. Des catalyseurs appropriés comprennent des catalyseurs de molybdène et de tungstène comme des molybdates d'organoammonium et des tungstates d'organoammonium définis par les formules ci-après :

[R²₄N] _{(2y-6x)}MₓO_{y},[R³₃NH]_{(2y-6x]}MₓO_{y}

où O représente de l'oxygène; M représente du molybdène ou du tungstène, x et y représentent le nombre d'atomes M et O dans la molécule basé sur une valence de +6 pour le molybdène, +6 pour le tungstène et -2 pour l'oxygène et les radicaux R² et R³ peuvent être identiques ou différents et choisis parmi les hydrogènes, un groupe alkyl et un groupe alkylène, chacun renfermant de 1 à 20 atomes de carbone et des groupes cycloaliphatique renfermant chacun de 5 à 16 atomes de carbone. Tous les radicaux R² et R³ ne peuvent pas être de l'hydrogène.

Des exemples spécifiques de molybdates appropriés d'organoammonium et de tungstates d'organoammonium comprennent les molybdates tridodecylammonium et les tungstates de tridodecylammonium, les molybdates et les tungstates de methyltricaprilammonium et les molybdates et les tungstates de tri(-tridecyl) ammonium, et les molybdates et les tungstates de tri-octylammonium. De préférence, on utilise de 0,1 à 10 mml de catalyseur par mole de monomère total. Le rapport molaire du catalyseur au cocatalyseur peut varier de 200/1 à 1/10.

Le cocatalyseur comprend un alkyl d'aluminium ou un halogénure d'alkyl aluminium ayant réagi avec un alcool de façon à inhiber l'effet réducteur du cocatalyseur. La réaction est rapide et entraîne un dégagement d'hydrocarbures volatils comme l'éthane, si le diéthyl d'aluminium est le cocatalyseur. Des exemples spécifiques de composés d'alkylaluminium comprennent le dichlorure d'éthylaluminium, le monochlorure de diéthylaluminium, le sesquichlorure d'éthylaluminium, l'iodure de diéthylaluminium, le diodure d'éthylaluminium et le dichlorure d'éthylaluminium et analogues.

Le moulage par injection à réaction RIM (Reaction Injection Molding), et le moulage par transfert de résine RTM (Resin Transfer Molding), sont des formes de polymérisation en masse qui apparaissent dans un moule fermé. Les procédés RIM et RTM diffèrent du moulage par injection de matière thermoplastique sous de nombreux aspects importants. Le moulage par injection de matières thermoplastiques est mis en oeuvre à des pressions d'environ 7 10⁷ Pa à 14 10⁷ Pa (environ 10 000 à 20 000 psi) dans la cavité du moule en fondant une résine solide et en l'acheminant dans un moule maintenu à une température en-dessous de la température de transition vitreuse du polymère et la résine fondue est typiquement à une température d'environ 150°C à 350°C. La viscosité de la résine fondue est généralement comprise dans la gamme de 50 à 1 000 Pa.s (50 000 à 1 000 000 cps). Dans le moulage par injection de matières thermoplastiques, il se produit une solidification en environ 10-90 secondes, en fonction de la dimension des particules. Aucune réaction chimique ne se produit dans le moule.

Dans les procédés RIM et RTM, la viscosité des matériaux amenés au moule est d'environ 0,05 à 3 Pa.s (50 à 3 000 cps), de préférence comprise dans la gamme de 0,1 à 1,5 Pa.s (100 à 1 500 cps) à une température allant de la température ambiante à 80°C. Au moins un composant dans la formulation RIM ou RTM est resté un monomère qui est polymérisé en un polymère dans le moule. La distinction entre le moulage par injection et les procédés RIM/RTM réside dans le fait que dans ces derniers procédés, une réaction chimique se produit pour transformer un monomère en un état polymère.

La polymérisation en masse des monomères à fonction norbornène est amorcée à une température relativement basse et la réaction exothermique est relativement brève, ce qui permet l'utilisation de moules en matière plastique.

Les moules en matière plastique sont moins coûteux que les moules métalliques, ce qui rend réalisable de façon économique le moulage d'éléments de structure en petites séries. Lors de l'utilisation des formulations de réaction, il est préférable de purger le moule avec de l'azote pour éviter la contamination du catalyseur qui s'y trouve.

La souplesse de transformation du matériau utilisé est due au système catalytique. Le procédé RIM traditionnel, en raison de la rapidité de la réaction chimique, se heurte à des limites quant à la taille des pièces produites. Le moulage de grandes pièces nécessite des installations de grande capacité, donc d'importants investissements. Le matériau utilisé par contre, offre la possibilité au mouleur de conduire la cinétique de la réaction en fonction de la pièce à produire. Les pièces de petites tailles supportent une réaction rapide (temps de gel variant entre 5 et 15 secondes) et un cycle court (1 à 3 minutes, ce qui rend la production en grande série possible.

Lorsque l'on souhaite obtenir des éléments de structure de taille importante, on utilise un matériau présentant une durée de vie en pot relativement longue. On peut notamment obtenir des éléments de dimensions supérieures à 1,2 par 1,5 m.

La plus grosse pièce moulée à ce jour pèse environ 300 kgs, le produit étant injecté en 8 mn et le temps du cycle ne dépassant pas 45 mn.

On peut notamment se référer au document EP-0 324 979 qui décrit des formulations de norbornène présentant une durée de vie en pot plus longue.

Ce document décrit une composition co-catalytique comprenant au moins un monomère de type norbornène, un co-catalyseur à ouverture de noyau par méthathèse choisi parmi les alkoxyalkylaluminiums, les aralkoxyalkylaluminiums, les halogénures d'alkoxyalkylaluminium, les halogénures d'aralkoxyalkylaluminium, et leurs mélanges. Les groupes alkoxy et les groupes aralkoxy sont dérivés d'alcools ramifiés choisis parmi les alcools tertiaires, les alcools primaires empêchés ayant pour structure (II): 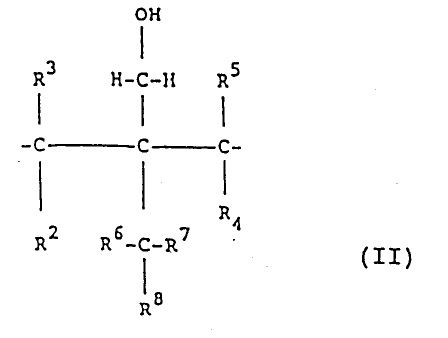 où dans le groupe II ci-dessus R², R³, R⁴, R⁵, R⁶, R⁷ et R⁸ sont choisis individuellement parmi l'hydrogène, les groupes alkyle, alcényle, alcinyle, cycloaliphatique et aryle ayant 1 à 12 atomes de carbone,
les alcools secondaires empêchés ayant pour structure

(I): 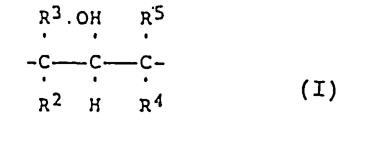 où, dans le groupe précité, R³ et R⁵ sont choisis individuellement parmi l'hydrogène, les groupes alkyle, alcényle, alcinyle, cycloaliphatique et aryle de 1 à 12 atomes de carbone et R² et R⁴ sont choisis individuellement parmi les groupes alkyle, alcényle, alcinyle, cycloaliphatique et aryle de 1 à 12 atomes de carbone, et leurs mélanges. Cette composition co-catalytique, lorsqu'elle est combinée à un catalyseur, est à même de prolonger la durée d'utilisation de mélanges de moulage contenant au moins un monomère de type norbornène.

Le matériau utilisé pour réaliser les éléments de structure selon l'invention permet également d'obtenir des formes complexes avec des épaisseurs variables, des inserts, des bossages et/ou des nervurages, sans difficulté et avec des coûts d'outillage et de transformation relativement faibles.

Outre les avantages liés à sa mise en oeuvre, le matériau utilisé est également intéressant par ses excellentes propriétés physiques et chimiques. Dans un même matériau, on retrouve associées: la résistance au choc (même à - 40°C), la résistance en traction, la rigidité, les résistances thermique et chimique et des propriétés d'isolation électrique. En outre, le renforcement à la fibre de verre n'est pas nécessaire, ce qui entraîne l'absence de tout problème lié à l'orientation de cette fibre. Le matériau utilisé est auto-démoulant, et ne nécessite par l'utilisation d'un agent de démoulage (interne ou externe).

On peut également se référer à l'article "Nouveaux thermodurcissables résistants au choc" paru dans la revue PLAST EUROPE, avril 1993, pages 74 à 76, en ce qui concerne la mise en oeuvre et les propriétés du matériau utilisé. Le contenu de cet article est contenu par référence dans la présente demande.

Comme indiqué précédemment, les éléments de structure selon l'invention peuvent également être réalisés en polyuréthane.

Ces matériaux sont parfaitement connus. A titre de référence, on peut citer les documents suivants:
- "Encyclopedia of Polymer and Science Technology", volume 15, chapitre "Polyuréthanne Technology".
- ULLMANNS, "Encyklopädie der Technischen Chemie", volume 19, chapitre "Polyuréthanne" - Dr UHLIG et Dr DIETRICH, BAYER AG.
- Monographie Sciences et Techniques de l'Ingénieur - A3425.

Parmi ces types de polyuréthanne, on choisira avantageusement ceux résultant de la réaction du MDI non distillé (mélange d'environ 55% de diphenyl-méthane 4,4' et 2,4' di-isocyanate, 25% de tri-isocyanate et 20% de prépolymères isocyanate), avec un polyol du type polyester.

Ces polyols sont obtenus par réaction d'un polyacide avec un glycol et un triol, conduisant à la formation d'un polyester polyol branché.

Comme indiqué précédemment, les matériaux du type polyuréthane sont mis en oeuvre selon la technologie RIM ou RTM. Ces technologies ont déjà été décrites en référence aux monomères ayant une fonction norbornène.

Typiquement, le polyuréthanne obtenu possède les propriétés suivantes:

| | |
|---|---|
| - module d'Young | 1800 MPa selon la norme DIN 53457 |
| - HDT sous 1,85 MPa | 90°C selon la norme ISO 75 |
| - résistance maximum en flexion | 58 MPa selon la norme ISO 78 |
| - dureté shore | 75 |

Ainsi, comme cela a été indiqué précédemment, les éléments de structure conformes à l'invention peuvent résister à la corrosion tout en reprenant des efforts de structure. Ils sont, en effet, destinés à être soumis à une pression supérieure à 5 kg/cm² pour assurer l'étanchéité des dispositifs dans lesquels ils sont utilisés.

Enfin, le matériau présente un retrait tel qu'il assure l'étanchéité autour des pièces insérées dans l'élément de structure selon l'invention.

Les signes de référence insérés après les caractéristiques techniques mentionnées dans les revendications, ont pour seul but de faciliter la compréhension de ces dernières, et n'en limitent aucunement la portée.

## Revendications

1. Elément de structure d'un dispositif de traitement de matières corrosives à chaud, ledit élément étant en une seule pièce et constitué de monomères qui sont polymérisés en masse dans un moule fermé, caractérisé en ce qu'il comporte un cadre périphérique (20, 22, 24, 25, 27) et une partie centrale (21, 23, 11, 26) d'épaisseur plus faible, ledit élément assurant une étanchéité pour la matière corrosive quand il est placé dans le dispositif et qu'une contrainte extérieure est exercée sur le dispositif.

2. Elément selon la revendication 1, caractérisé en ce que lesdits monomères ont une fonction norbornène.

3. Elément selon la revendication 2, caractérisé en ce que le monomère ayant une fonction norbornène est le dicyclopentadiène.

4. Elément selon la revendication 1, caractérisé en ce que le polymère obtenu est du type polyuréthanne.

5. Elément selon l'une des revendidations 1 à 4, caractérisé en ce qu'il présente une forme sensiblement plane.

6. Elément selon l'une des revendications 1 à 5, caractérisé en ce que les moyens nécessaires au fonctionnement du dispositif, tels que les moyens d'alimentation en fluide, ou à son contrôle, sont intégrés audit élément.

7. Elément selon l'une des revendications 1 à 6, caractérisé en ce qu'il comporte des inserts.

8. Elément selon l'une des revendications 1 à 7, caractérisé en ce qu'il constitue un plateau (1) de filtre-presse et comporte au moins une ouverture (3) pour l'introduction de la matière à traiter et au moins un passage (5) pour la sortie du liquide.

9. Elément selon l'une des revendications 1 à 7, caractérisé en ce qu'il constitue un plateau (6) pour un échangeur de chaleur.

10. Elément selon la revendication 9, caractérisé en ce qu'il comprend une partie centrale en forme de serpentin (7) et au moins un conduit (8, 9) pour le passage du fluide.

11. Elément selon l'une des revendications 1 à 7, caractérisé en ce qu'il constitue un plateau (10) pour un lit fluidisé et comporte des ouvertures (12) pour le passage d'un gaz.

12. Elément selon l'une des revendications 1 à 7, caractérisé en ce qu'il constitue un plateau de colonne à distiller et comporte au moins une ouverture (15) pour le passage de vapeurs, ladite ouverture étant surmontée d'une pièce (16) pour la condensation des vapeurs.

13. Elément selon l'une des revendications 1 à 7, caractérisé en ce qu'il constitue un plateau (31) pour une cellule d'électrolyse.

14. Dispositif de traitement de matières corrosives à chaud et sous contrainte, comprenant au moins deux éléments de structure selon l'une des revendications 1 à 13, lesdits éléments étant juxtaposés, et deux éléments terminaux, placés de part et d'autre desdits éléments de structure, au moins un desdits éléments terminaux étant mobiles pour pouvoir exercer une contrainte de pression sur lesdits éléments de structure.

15. Dispositif de traitement selon la revendication 14, caractérisé en ce que lesdits éléments de structure et lesdits éléments terminaux présentent une forme sensiblement plane, la contrainte de pression étant alors, de préférence, exercée dans une direction sensiblement perpendiculaire au plan desdits éléments de structure.

16. Utilisation du dispositif de traitement selon l'une des revendications 14 ou 15, avec des matières corrosives à une température inférieure ou égale à 100°C.

17. Utilisation du dispositif de traitement selon l'une des revendications 14 ou 15, avec une contrainte de pression supérieure à 5kg/cm².

## Claims

1. A structure element of a device for the treatment of corrosive materials in heat conditions, whereby the said element is made of a single piece and constituted of monomers which are mass-polymerised in a closed mould characterised in that it comprises a peripheral frame (20, 22, 24, 25, 27) and a central part (21, 23, 11, 26) of smaller thickness, whereas the said element ensures tightness for the corrosive material when it is placed in the device and when an external stress is exerted on the device.

2. An element according to claim 1, characterised in that the said monomers have a norbornen function.

3. An element according to claim 2, characterised in that the monomer exerting a norbornen function is the dicyclopentadien.

4. An element according to claim 1, characterised in that the polymer obtained is of the polyurethane type.

5. An element according to one of the claims 1 to 4, characterised in that it exhibits more or less a planar shape.

6. An element according to one of the claims 1 to 5, characterised in that the means necessary to the operation of the device, such fluid supply means, or necessary to its control, are integrated to the said element.

7. An element according to one of the claims 1 to 6, characterised in that it comprises inserts.

8. An element according to one of the claims 1 to 7, characterised in that it constitutes a filter-press plate (1) and comprises at least one opening (3) for the introduction of the material to be treated and at least one passage (5) for the outlet of the liquid.

9. An element according to one of the claims 1 to 7, characterised in that it constitutes a tray (6) for a heat exchanger.

10. An element according to claim 9, characterised in that it comprises a snake-shaped (7) central part and at least one duct (8, 9) for the passage of the fluid.

11. An element according to one of the claims 1 to 7, characterised in that it constitutes a plate (10) for a fluidised bed and comprises openings (12) for the passage of a gas.

12. An element according to one of the claims 1 to 7, characterised in that it constitutes a plate for a distillation column and comprises at least one opening (15) for the passage of steams, the said opening being capped by a part (16) to allow the steams to condense.

13. An element according to one of the claims 1 to 7, characterised in that it constitutes a plate (31) for an electrolysis cell.

14. A device for the treatment of corrosive material in heat and stress conditions, comprising at least two structure elements according to one of the claims 1 to 13, whereby the said elements are juxtaposed, and two end elements, arranged on either side of the said structure elements, whereas at least one of the said end elements is mobile in order to exert a pressure stress onto the said structure elements.

15. A treatment device according to claim 14, characterised in that the said structure elements and the said end elements are more or less planar in shape, whereby the pressure stress is preferably imparted in a direction more or less perpendicular to the plane of the said structure elements.

16. Usage of the treatment device according to one of the claims 14 or 15, with corrosive materials at a temperature equal to or less than 100°C.

17. Usage of the treatment device according to one of the claims 14 or 15 , with a pressure stress above 5 kg/cm².

## Patentansprüche

1. Strukturelement für eine Vorrichtung zur Warmbehandlung von korrosiven Materialien, wobei das Element aus einem Stück ist und aus Monomeren besteht, die in der Masse in einer geschlossenen Form polymerisiert sind, dadurch gekennzeichnet, daß es einen Umfangsrahmen (20, 22, 24, 25, 27) und einen Mittelteil (21, 23, 11, 26) mit einer geringeren Dicke aufweist, wobei das Element eine Dichtheit für das korrosive Material garantiert, wenn es in einer Vorrichtung angeordnet ist und eine äußere Spannung auf die Vorrichtung ausgeübt wird.

2. Element nach Anspruch 1, dadurch gekennzeichnet, daß die Monomeren eine Norbornenfunktion haben.

3. Element nach Anspruch 2, dadurch gekennzeichnet, daß das Monomer, das eine Norbornenfunktion hat, Dicyclopentadien ist.

4. Element nach Anspruch 1, dadurch gekennzeichnet, daß das erhaltene Polymer vom Typ Polyurethan ist.

5. Element nach einem der Ansprüche 1 bis 4, dadurch gekennzeichnet, daß es eine im wesentlichen flache Form aufweist.

6. Element nach einem der Ansprüche 1 bis 5, dadurch gekennzeichnet, daß die Mittel, die für die Funktion der Vorrichtung notwendig sind, wie die Mittel zur Fluidversorgung, oder zu ihrer Steuerung, im Element integriert sind.

7. Element nach einem der Ansprüche 1 bis 6, dadurch gekennzeichnet, daß es Einsätze aufweist.

8. Element nach einem der Ansprüche 1 bis 7, dadurch gekennzeichnet, daß es eine Platte (1) für eine Filterpresse bildet und mindestens eine Öffnung (3) für das Einführen des zu behandelnden Materials und mindestens einen Durchgang (5) für den Ausgang der Flüssigkeit umfaßt.

9. Element nach einem der Ansprüche 1 bis 7, dadurch gekennzeichnet, daß es eine Platte (6) für einen Wärmetauscher bildet.

10. Element nach Anspruch 9, dadurch gekennzeichnet, daß es einen Mittelteil in Form einer Schlange (7) aufweist und mindestens eine Leitung (8, 9) für den Durchgang des Fluides.

11. Element nach einem der Ansprüche 1 bis 7, dadurch gekennzeichnet, daß es eine Platte (10) für ein Fließbett bildet und Öffnungen (12) für den Durchgang eines Gases aufweist.

12. Element nach einem der Ansprüche 1 bis 7, dadurch gekennzeichnet, daß es eine Platte für eine Destillationskolonne bildet und mindestens eine Öffnung (15) für den Durchgang von Dämpfen umfaßt, wobei sich über der Öffnung ein Bauteil (16) für die Kondensation der Dämpfe befindet.

13. Element nach einem der Ansprüche 1 bis 7, dadurch gekennzeichnet, daß es eine Platte (31) für eine Elektrolysezelle bildet.

14. Vorrichtung zur Warmbehandlung von korrosiven Materialien unter Spannung, umfassend mindestens zwei Strukturelemente nach einem der Ansprüche 1 bis 13, wobei die Elemente nebeneinanderliegen, und zwei Endelemente, die beiderseits der Strukturelemente angeordnet sind, wobei mindestens eines der Endelemente beweglich ist, um eine Druckspannung auf die Strukturelemente auszuüben.

15. Behandlungsvorrichtung nach Anspruch 14, dadurch gekennzeichnet, daß die Strukturelemente und die Endelemente eine im wesentlichen flache Form aufweisen, wobei die Druckspannung vorzugsweise in einer im wesentlichen senkrechten Richtung zur Ebene der Strukturelemente ausgeübt wird.

16. Verwendung der Behandlungsvorrichtung nach einem der Ansprüche 14 oder 15 mit korrosiven Materialien bei einer Temperatur unter oder gleich 100°C.

17. Verwendung der Behandlungsvorrichtung nach einem der Ansprüche 14 oder 15 mit einer Druckspannung von über 5 kg/cm².
